Europäisches Patentamt

European Patent Office

Office européen des brevets

(19)

(11) Publication number: **0 126 095**
**B1**

(12) **EUROPEAN PATENT SPECIFICATION**

(45) Date of publication of patent specification: **24.08.88**

(51) Int. Cl.⁴: **G 01 N 27/36**

(21) Application number: **83903425.3**

(22) Date of filing: **10.11.83**

(86) International application number:
**PCT/NO83/00049**

(87) International publication number:
**WO 84/02002 24.05.84 Gazette 84/13**

(54) **SOLID ION-SELECTIVE ELECTRODES.**

(30) Priority: **11.11.82 NO 823760**

(43) Date of publication of application:
**28.11.84 Bulletin 84/48**

(45) Publication of the grant of the patent:
**24.08.88 Bulletin 88/34**

(84) Designated Contracting States:
**AT BE CH DE FR GB LI LU NL SE**

(56) References cited:
**DE-A-2 050 050**
**DE-B-1 169 697**
**US-A-3 853 731**

(73) Proprietor: **STIFTELSEN FOR INDUSTRIELL OG TEKNISK FORSKNING VED NTH, (SINTEF)**
**N-7034 Trondheim-NTH (NO)**

(72) Inventor: **FJELDLY, Tor, Arne**
**Ole Laulos vei 26**
**N-7080 Heimdal (NO)**
Inventor: **NAGY, Kalman**
**Chr. Eggens vei 75**
**N-7000 Trondheim (NO)**

(74) Representative: **Barker, Rosemary Anne et al**
**Barlow, Gillett & Percival 94 Market Street**
**Manchester M1 1PJ (GB)**

Courier Press, Leamington Spa, England.

## Description

The present invention is directed to a solid state electrode which is sensitive to selected ions.

The invention is more particularly concerned with a method of making such an electrode which includes the steps of coating one surface of a glass membrane, sensitive to selected ions, with a suitable metallic contact agent, heating the glass membrane to cause the contact agent to provide a contact area thereon and connecting an electrical conductor to the surface of said membrane by way of said contact agent. The invention further pertains to an electrode as made by such method.

Many attempts have been made to make solid state pH-glass electrodes. In conventional glass electrodes the electric contact between the outer circuit and the ion-sensitive glass membrane is made by means of an inner contact solution. A totally solid state construction has clear advantages in the form of reliability and versatility of use (temperature, pressure) and is better suited to modern production techniques.

In known solid state constructions, various direct metal-glass-contacts have been proposed but without completely satisfactory results. Recently a contact with good stability has been developed wherein silver halides, for example AgCl or AgBr, are employed.

Thus, for instance, United States Patent Specification No. 3853731 teaches the fabrication of an electrode of the kind with which the present invention is concerned in which a mixture of silver oxide and a salt consisting of silver chlorate, silver perchlorate, silver bromate or silver iodate; or silver hypochlorite or silver chlorite as well as the corresponding oxy acid silver silver salts of bromine and iodine is applied as a filler to the inside surface of a glass electrode. The electrode is then fired to convert the mixture to a composite of silver and silver chloride, bromide or iodide which is fused to the glass surface.

German Patent Specification DE—A—2050050 teaches an alternative method of production of such an electrode wherein successive coatings of ion-sensitive glass are applied to the end of an electro-chemically active metal conductor, the first of these coatings including a halide of the active metal, which may be copper, silver, cobalt or cadmium.

A different approach is the development of micro-electronic sensors, such as ISFET's (Ion-Sensitive Field-Effect-Transistors). In these constructions a thin film of glass membrane is employed as an integral part of the micro-electronic circuit, and functions both as a potential-forming element (by exposure to liquids containing relevant cations) and as a field insulator. Since the electrical information is transferred by field effect, blocking contacts are acceptable in this instance.

With the exception of ISFET's and similar arrangements based on field effect, it appears that reversibility in the membrane contact is a primary requirement for obtaining sufficient sensitivity, response time and stability in an ion-selective electrode. In addition, the contact must have electrical conductivity. Both of these requirements can normally be fulfilled by good choice of an electrolytic solution contact. The various silver-based solid contacts mentioned above are good electrical conductors (ionic or electronic) and presumably also provide a certain degree of reversibility when they are employed as contacts on glass. A possible mechanism for rapid ion exchange is that mobile silver ions diffuse into the glass during fabrication, especially when heat treatment is involved.

A main object of the invention is, on the basis of this known technique, to create glass electrodes with improved use properties, especially with respect to the formation of a reversible contact surface.

The present invention provides a method of making a solid state ion-selective electrode as above discussed characterised in that the contact agent is silver fluoride which is mixed in a dispersing agent which allows the silver fluoride to coat the surface of the glass membrane evenly, the heating of the glass membrane initially causing the dispersing agent to evaporate, further heating causing the silver fluoride to etch the surface of the glass membrane and diffuse metallic ions into the etched surface to provide an ion reversible contact area, and in the further step of coating the etched membrane surface with silver.

According to the invention it is found that silver fluoride (AgF) can be used as the basis for forming good solid contacts on glass electrodes. AgF has previously been shown to make an excellent reversible contact on lanthanum fluoride ($LaF_3$)-membranes (for example for use in fluoride analysis). AgF is known to be unstable in contact with oxides at the elevated temperature as needed for preparing the known contacts. Use of AgF, however, causes etching of the glass surface (by the fluoride) combined with a diffusion of silver ions into the glass, both of these effects being beneficial for the establishment of a proper junction.

Preliminary tests on glass membranes with such solid contacts show that they function properly and have a response which is substantially the same as conventional electrodes with solution contacts.

In the accompanying drawings:—

Fig. 1 is a cross sectional view of a solid state ion-sensitive electrode according to the present invention;

Fig. 2 is a pictorial schematic showing a solid state differential sensor according to the present invention connected to an integral preamplification circuit;

Fig. 3 shows a comparison of the response curves for the improved solid state and conventional sodium sensitive electrodes;

Fig. 4 shows a response curve for a pH-$LaF_3$ differential electrode according to the present invention for increases in NaF concentration; and Fig. 5 shows a series of curves providing the transient response for pH-LaF$_3$ differential electrodes according to the present invention.

In fluoride analysis with ion-selective electrodes the test solution is normally given a fixed pH, usually acid, by means of a buffer. This was done in order to stabilize the degree of fluoride protonising in the reaction:

$$HF \rightleftharpoons H^+ + F^-$$

A differential sensor where a pH membrane is used as a reference electrode and a LaF$_3$ membrane as an F-indicator, should therefore be ideal for fluoride analysis.

### Examples
#### The preparation of contacts

Commercial pH- and sodium electrodes (radiometer G 202B (ph), G502 (Na$^+$) and Broadley-James 9015 (pH) were completely stripped and cleaned so that only glass shell 1 consisting of the membrane bulb and the supporting glass tube 6 were left.

AgF-contact material was finely dispersed in isopropanol and some few drops of the mixture were placed on the inside of the membrane bulb. The bulb was gradually heated in a gas flame, first gently in order to boil away the isopropanol. In the process a thin layer 2 of AgF was deposited almost uniformly over the inner surface of the bulb. Thereafter the bulb was heated until a yellow colour was produced presumably indicating fusion of AgF to the glass surface. After cooling off to room temperature, the contact was completed by covering it with silver-conducting paint.

The technique of dispersing AgF in a volatile fluid was developed as a means of spreading the contact material finely and uniformly over the contact area. Direct application of dry AgF powder did not give a satisfactory result since the material has a tendency to collect on the bottom of the bulb. When the layer is too thick, it causes the bulb to crack during the heating process by reason of differences in thermal expansion.

A qualitative picture of the structure of the contact junction was obtained by Auger electron spectroscopy. For this purpose a fragment of the supporting glass tube immediately next to the membrane bulb (a location where the AgF contact had formed as well) was examined.

The chemical profile of the contact junction was studied by means of an automatic Auger microprobe from Varian Associates. Argon ions having an energy of 3 keV and a current density of 85μA/cm$^2$ were employed for the sputtering. The chemical composition was checked every 15 seconds. The electron beam energy was 5 kV at a current of $2 \times 10^{-7}$ A into an area of approximately 30μm$^2$. The basic pressure was $10^{-9}$ torr (1torr = 1.333.10$^2$Pa).

Qualitatively, the analysis showed that the silver and fluoride content decreased gradually without disappearing totally as the silicon signal, originating from the glass, emerged. This indicates that most probably AgF is fused together with the glass to make a gradual junction with both fluoride and silver ions entering the glass. Only the silver ions are expected to be reasonably mobile at room temperature. A fused gradual junction and the presence of mobile silver ions are important factors favouring the rapid ion exchange which is necessary in order to get a truly reversible junction.

#### Electrode design

After having provided the stripped Radiometer G 202 B (pH) and G 502 (Na$^+$) electrodes with AgF contacts, the original electric leads 5 having insulation 4 were reconnected, and the electrodes were potted with a silicone rubber 7 (Dow Corning, Sylgard 184). This contributed to strengthening the glass bulb.

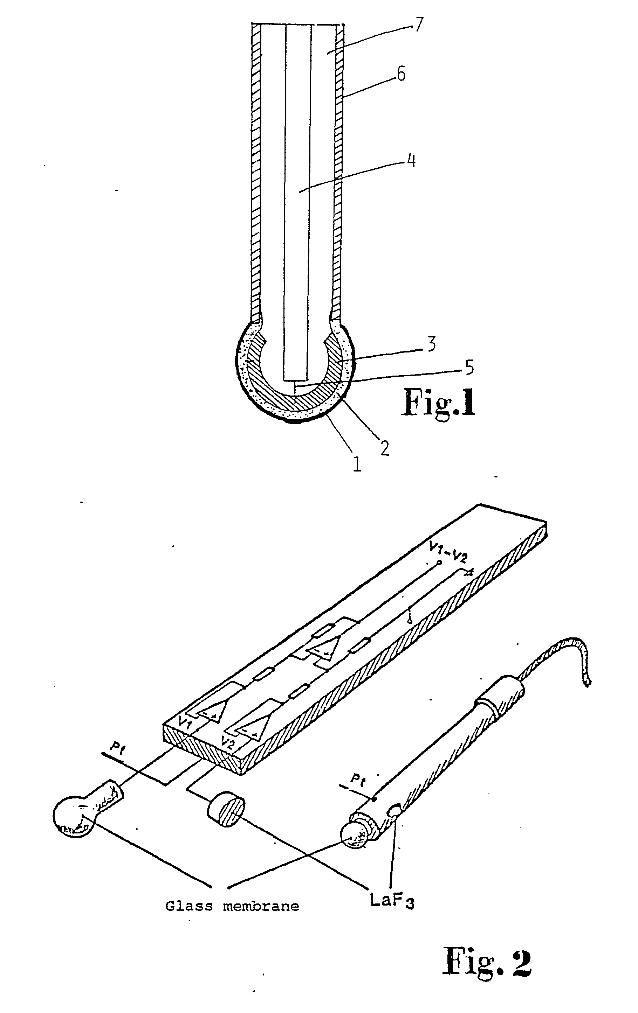

For the differential sensors, glass membranes from "Broadley-James 9015" pH electrodes were used in combination with LaF$_3$ single crystalline membranes, both with AgF contacts. The design is shown in two representations in Fig. 2. The glass bulb was mounted at an end of an acrylic tube; the LaF$_3$ membrane and a grounded auxiliary platinum electrode were mounted on the side wall.

Impedence matching and differential amplification circuitry is contained within the sensor body.

#### Experiments
#### 1. pH and sodium electrodes

The solid state pH and sodium electrodes were evaluated by determining their response in pH and sodium standard solutions respectively, and by measuring their response times for various changes in the concentration of the ions concerned. For comparison, the same measurements were carried out at the same time on conventional unmodified electrodes of the same type, that is to say "Radiometer electrodes G202B (pH) and G502 (Na$^+$). The solutions, which were in a volume of 50 ml, were stirred with magnetic stirrers. The reference electrode was of the type "Radiometer K 701" (double junction). For potential readings use was made of a "Radiometer PHM 64 Research" pH meter. All electrodes were pretreated in accordance with recommended procedures before use.

Standard pH buffer solutions which were used were of the type "Merck Titrisol". Apart from a constant potential difference, there is not any apparent difference in the response of the solid state and the conventional electrodes. In fact, they follow each other even in the small deviations from the ideal log-linear behaviour.

The pH electrodes were also tested in standard acid-base titrations. In these experiments, NaOH solutions were added periodically to HCl samples which resulted in characteristic electrode responses in the region of neutrality of the solution. Such measurements are precise methods for determining the acid content of the samples which are not treated with buffers. Titration cur-

ves for different HCl samples obtained with the two pH electrodes indicate excellent conformity between the two.

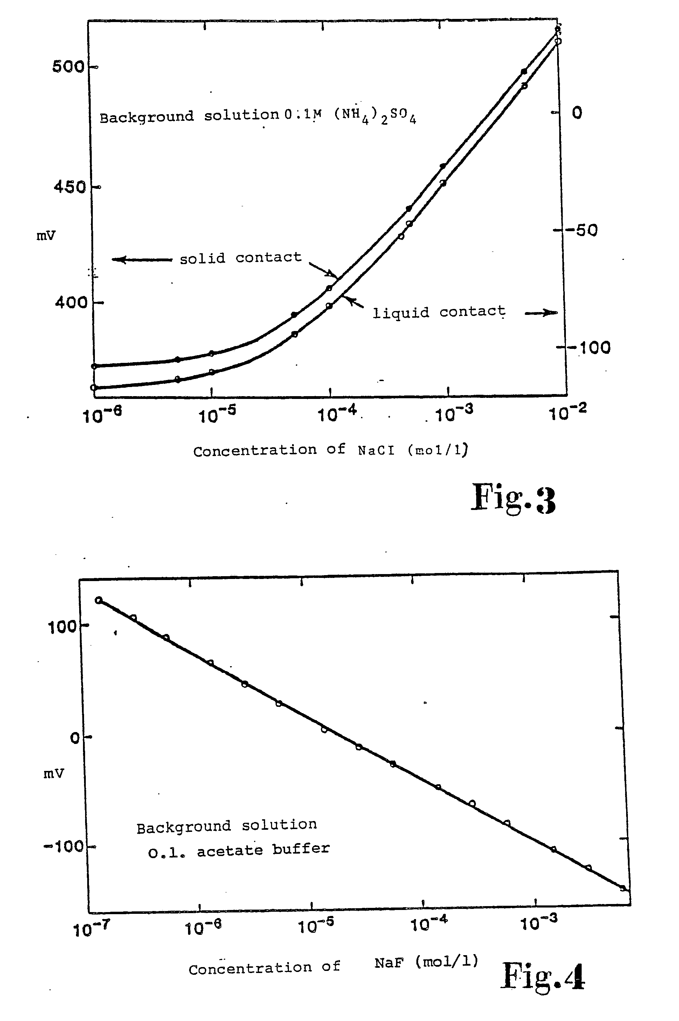

The response curves for the sodium electrodes were obtained by pipetting known additions of standard NaCl down into a background solution of 0.1 $(NH_4)_2SO_4$. The results for the solid state and the conventional electrodes are shown in Fig. 3. Again, the two electrodes are found to have very similar responses, both in conformity with expected responses for such electrodes.

### 2. pH-LaF₃-differential sensors

The response of pH-LaF₃-differential sensors was determined in the fluorine sensing mode, that is to say by the addition of known quantities of fluoride (NaF) to a particular pH-acetate buffer-background solution (0.1 m $HCH_3$ COOH + 0,1 M $NaCH_3COOH$). The potential vs. fluoride-concentration response curve is shown in Fig. 4. It is clear that the log-linear response extends down to concentrations in the neighbourhood of $10^{-7}$ M NaF, which is better than normally obtained with a conventional set-up where is better than normally obtained with a conventional set-up where a standard reference electrode is employed. The same effect was previously observed for other differential sensor combinations where halide membranes were used as reference elements. This lowering of the boundary of detection which occurs appears therefore to be associated with the elimination of the conventional reference electrode for the benefit of the solid membrane reference.

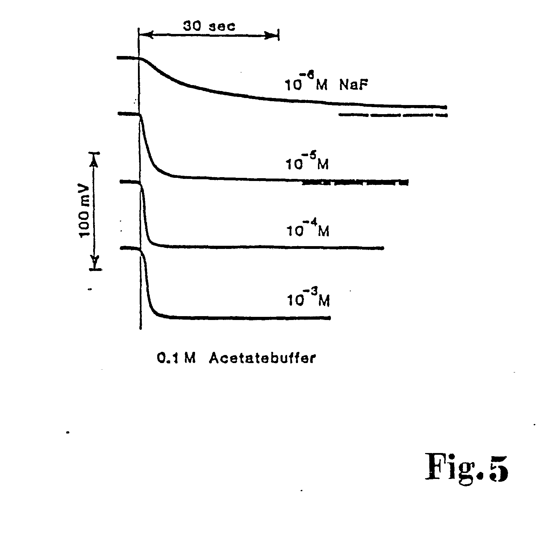

·The response time for the sensor appears to be determined by the properties of the "active" membrane, that is to say LaF₃ in this case. In Fig. 5 there are shown such response time measurements for successive ten-fold increases in the fluoride level in the acetate buffer background solution.

### Claims

1. A method of making a solid state ion-selective electrode including the steps of coating one surface of a glass membrane (2), sensitive to selected ions, with a suitable metallic contact agent (3), heating the glass membrane (2) to cause the contact agent (3) to provide a contact area thereon and connecting an electrical conductor (5) to the surface of said membrane (2) by way of said contact agent, characterised in that the contact agent (3) is silver fluoride which is mixed in a dispersing agent which allows the silver fluoride (3) to coat the surface of the glass membrane (2) evenly, the heating of the glass membrane (2) initially causing the dispersing agent to evaporate, further heating causing the silver fluoride (3) to etch the surface of the glass membrane (2) and diffuse metallic ions into the etched surface to provide an ion reversible contact area, and in the further step of coating the etched membrane surface with silver.

2. A method according to claim 1 characterised in that the dispersing agent is isopropanol.

3. A solid state ion-selective electrode comprising a glass membrane (2) sensitive to selected ions and having a contact area provided by heating the membrane (2) whilst coated on one surface with a metallic contact agent (3), an electrical conductor (5) being connected to the contact area characterised in that said one surface of said glass membrane (2), having been etched with silver flouride, has silver ions dispersed therein to provide an ion reversible contact area, the etched surface of said glass membrane (2) being coated with silver to provide an ion collection surface for said conductor (5), and the glass membrane (2) being a hollow glass bulb with the etched contact area being provided on the inside surface of said glass bulb.

4. A solid state electrode according to claim 3 characterised in that the electrode is sealed with a silicone compound.

### Patentansprüche

1. Verfahren zur Herstellung einer festen ionenempfindlichen Elektrode, mit den Verfahrensschritten des Beschichtens einer Fläche einer Glasmembran (2), die auf bestimmte Ionen empfindlich ist, mit einem geeigneten metallischen Kontaktmittel (3), des Erhitzens der Glasmembran (2), um das Kontaktmittel (3) zur Bildung eines Kontaktbereiches darauf zu veranlassen, und des Verbindens eines elektrischen Leiters (5) mit der Oberfläche der Membran (2) über dieses Kontaktmittel, dadurch gekennzeichnet, daß das Kontaktmittel (3) Silberfluorid ist, das in ein Dispersionsmittel gemischt ist, das dem Silberfluorid (3) das gleichmäßige Beschichten der Oberfläche der Glasmembran (2) erlaubt, daß das Erhitzen der Glasmembran zunächst ein Verdampfen des Dispersionsmittels bewirkt und die weitere Erhitzung ein Ätzen der Oberfläche der Glasmembran (2) durch das Silberfluorid (2) und das Eindrigen von Metallionen in die geätzte Fläche zur Bildung eines ionenreversiblen Kontaktbereiches bewirkt, und daß im weiteren Verfahrensschritt die geätzte Membranfläche mit Silber beschichtet wird.

2. Verfahren nach Anspruch 1, dadurch gekennzeichnet, daß das Dispersionsmittel Isopropanol ist.

3. Feste ionenempfindliche Elektrode mit einer aufbestimmte Ionen empfindlichen Glasmembran (2) und mit einem durch Erhitzen der Membran (2) bei der Beschichtung auf einer Seite mit einem metallischen Kontaktmittel (3) erhaltenen Kontaktbereich, und mit einem mit dem Kontaktbereich verbundenen elektrischen Leiter (5), dadurch gekennzeichnet, daß die eine Fläche der Glasmembran (2), die mit Silberfluorid geätzt worden ist, eingedrungene Silberionen zur Bildung eines ionenempfindlichen Kontaktbereiches aufweist, daß die geätzte Fläche der Glasmembran (2) mit Silber beschichtet ist, um eine Ionensammelfläche für den Leiter (5) zu bilden, und daß die Glasmembran (2) ein hohler Glaskolben ist, bei welchem sich der geätzte Kontaktbereich auf der Innenseite des Glaskolbens befindet.

4. Feste Elektrode nach Anspruch 3, dadurch gekennzeichnet, daß die Elektrode mit einer Siliconmasse verschlossen ist.

**Revendications**

1. Procédé de fabrication d'une électrode à l'état solide, sélective à l'égard des ions, selon lequel on revêt une surface d'une membrane de verre (2), sensible à des ions choisis, d'un agent de contact (3) métallique convenable, on chauffe la membrane de verre (2) pour que l'agent de contact (3) assure une zone de contact sur celle-ci et on raccorde un conducteur électrique (5) à la surface de la dite membrane (2) par l'intermédiaire du dit agent de contact, caractérisé par le fait que l'agent de contact (3) est du fluorure d'argent qui est mélangé dans un agent dispersant permettant au fluorure d'argent (3) de revêtir régulièrement la membrane de verre (2), le chauffage de la membrane de verre (2) faisant initialement évaporer l'agent dispersant, la poursuite du chauffage amenant le fluorure d'argent (3) à attaquer la surface de la membrane de verre (2) et diffuser des ions métalliques dans la surface attaquée pour réaliser une surface de contact réversible à l'égard des ions, et on revêt ensuite d'argent la surface de membrane attaquée.

2. Procédé selon la revendication 1, caractérisé par le fait que l'agent dispersant est l'isopropanol.

3. Electrode à l'état solide, sélective à l'égard des ions, comprenant une membrane de verre (2) sensible à des ions choisis et possèdant une zone de contact réalisée par chauffage de la membrane (2) alors qu'elle est revêtue sur une surface d'un agent de contact métallique (3), un conducteur électrique (5) étant raccordé à la zone de contact, caractérisée par le fait que la dite surface de la dite membrane de verre (2), ayant été attaquée par du fluorure d'argent, possède des ions argent dispersés dans celle-ci pour produire une zone de contact reversible à l'égard des ions, la surface attaquée de la dite membrane de verre (2) étant revêtue d'argent pour fournire une surface collectrice à l'égard des ions pour ledit conducteur (5) et la membrane de verre (2) étant une ampoule de verre creuse, la zone de contact attaquée se trouvant sur la surface intérieure de la dite ampoule de verre.

4. Electrode à l'état solide, sélective à l'égard des ions selon la revendication 3, caractérisée par le fait que l'électrode est scellée avec un composé de silicone.

0 126 095

Fig.1

Fig. 2

Glass membrane

LaF$_3$

Fig.3

Fig.4

2

Fig.5